# EUROPÄISCHE PATENTANMELDUNG

(11) **EP 2 075 670 A1**
(43) Veröffentlichungstag der Anmeldung: **01.07.2009**
(21) Anmeldenummer: 08022112.0
(22) Anmeldetag: 19.12.2008
(51) Int. Cl.: G06F 3/00, H04L 12/24, H04L 12/56, H04L 29/08

(54) **Verfahren zur Konfiguration von Netzwerkgeräten, insbesondere Ethernet-Switchen**

(30) Priorität: 22.12.2007 DE 102007062493
(71) Anmelder: Hirschmann Automation and Control GmbH, 72654 Neckartenzlingen (DE)
(72) Erfinder: Walden, Andreas, D-72124 Pliezhausen (DE)
(74) Vertreter: Greif, Thomas

(57) **Zusammenfassung**

Die Erfindung betrifft ein Verfahren zur Konfiguration von Netzwerkgeräten, insbesondere Ethernet-Switchen, wobei auf einer Anzeigeeinheit des Netzwerkgerätes oder eines an das Netzwerkgerät anzuschließendes Konfigurationsgerät eine Eingabemaske zur Eingabe von Konfigurationsdaten erscheint, wobei erfindungsgemäß vorgesehen ist, dass die Eingabemaske in zumindest zwei unterschiedlichen Formaten darstellbar ist und die Eingabe der Konfigurationsdaten in den zumindest beiden Formaten inhaltsgleich erfolgt, wobei die eingegebenen Daten nach ihrer Eingabe je nach Format der Eingabemaske in unterschiedlichen Datenformaten weiterverarbeitet werden.

## Beschreibung

Die Erfindung betrifft ein Verfahren zur Konfiguration von Netzwerkgeräten, insbesondere Ethernet-Switchen, gemäß den Merkmalen des Oberbegriffes des Patentanspruches 1.

Aus dem Stand der Technik sind Netzwerke, insbesondere in der Industrie-Automation, bekannt, wobei in solchen Netzwerken unterschiedliche Netzwerkgeräte wie Switche, Router, Hubs, PCs und dergleichen angeordnet sind. Die Datenübertragung in solchen Netzwerken kann beispielsweise nach dem Ethernet-Standard, aber auch nach einem anderen Standard erfolgen.

Zur Inbetriebnahme eines solchen Netzwerkes mit seinen Netzwerkgeräten, aber auch im Falle von Austauschen solcher Geräte, sei es zur Modernisierung oder sei es zur Fehlerbehebung, ist es erforderlich, ein Netzwerkgerät zu konfigurieren. Das bedeutet, dass dem Netzwerkgerät je nach Anwendungsfall und Einsatzort unterschiedliche Daten eingegeben werden müssen. Diese Daten werden auch als Konfigurationsdaten bezeichnet. Bei diesen Daten kann es sich beispielsweise um eine IP-Adresse, eine MAC-Adresse, den Namen oder Standort des Gerätes, seine Zugriffsrechte und dergleichen handeln.

Daher ist es erforderlich, über eine entsprechende Eingabeeinheit solche Konfigurationsdaten in das Netzwerkgerät einzugeben oder schon eingegebene und gespeicherte Konfigurationsdaten zu verändern. Hierzu weist entweder das Netzwerkgerät selber eine Anzeigeeinheit auf oder ein an das Netzwerkgerät anschließbares Konfigurationsgerät, z.B. ein PC, weist eine solche Anzeigeeinheit auf. Über die entsprechende Eingabeeinheit, insbesondere eine Tastatur, die an dem Netzwerkgerät oder an dem Konfigurationsgerät angeschlossen ist, können dann in einer Eingabemaske, die über einen entsprechenden Befehl von einer Bedienperson, beispielsweise einem Systemadministrator, eingegeben wird, aufgerufen werden.

Der Erfindung liegt die Aufgabe zugrunde, ein Verfahren zur Konfiguration von Netzwerkgeräten zu schaffen, mit dem die Eingabe von Konfigurationsdaten zur Konfiguration des Netzwerkgerätes verbessert wird.

Diese Aufgabe ist durch die Merkmale des Patentanspruches 1 gelöst.

Erfindungsgemäß ist vorgesehen, dass die Eingabemaske in zumindest zwei, vorzugsweise genau zwei unterschiedlichen Formaten darstellbar ist und die Eingabe der Konfigurationsdaten in den zumindest beiden Formaten gleich erfolgt, wobei die eingegebenen Daten nach ihrer Eingabe je nach Format der Eingabemaske in unterschiedlichen Datenformaten weiterverarbeitet werden.

Somit stellt die Erfindung in zumindest zwei unterschiedlichen Formaten jeweils eine Eingabemaske zur Verfügung, die mit den Konfigurationsdaten von der Bedienperson gefüllt werden kann. Danach werden die neu eingegebenen und/oder geänderten Konfigurationsdaten weiterverarbeitet, insbesondere übertragen und in einer Speichereinheit abgespeichert. Diese Speichereinheit kann in dem Netzwerkgerät selber oder an einem davon abweichenden Ort erfolgen.

Die Verbesserung ist darin zu sehen, dass beispielsweise dadurch, dass das eine Format ein Web-basiertes Format, insbesondere ein HTML-Format, und das andere Format ein DOS-Format ist, verbessert, dass dem Anwender unterschiedliche Aufmachungen der Eingabemaske zur Verfügung stehen, um seine Daten einzugeben. Zum einen wird dadurch der Eingabekomfort an die Gewohnheiten des Anwenders angepasst. So gibt es Anwender, die die Daten vorzugsweise in einem Web-basierten Format eingeben, wohingegen es andere Anwender gibt, die die Eingabe in einem DOS-Format bevorzugen. Außerdem ist ein weiterer Vorteil darin zu sehen, dass die je nach Format der Eingabemaske eingegebenen Daten in unterschiedlichen Datenformaten weiter verarbeitet werden können. Dadurch ist eine höhere Gestaltungsvielfalt bei den Standards der Netzwerkintrastruktur möglich.

In Weiterbildung der Erfindung wird mittels einer Bedieneinheit zwischen den beiden Formaten der Eingabemaske umgeschaltet. Dadurch ist es möglich, dass z.B. der eine Anwender die eine Eingabemaske in dem einen Format und ein anderer Anwender die Eingabemaske in dem anderen Format benutzt oder ein und derselbe Anwender zwischen den beiden Formaten umschaltet. Dabei ist auf jeden Fall sicherzustellen, dass, egal in welchem Format die Daten in die Eingabemaske eingegeben worden sind, diese Daten in dem jeweiligen Datenformat weiterverarbeitet, insbesondere übertragen und abgespeichert werden und danach wieder in dem jeweiligen Format der Eingabemaske darstellbar sind.

In Weiterbildung der Erfindung werden die in die jeweiligen Eingabenmasken eingegebenen Daten in den unterschiedlichen Datenformaten über eine Datenfernverbindung zwischen dem Netzwerkgerät und dem Konfigurationsgerät, z.B. der PC oder ein Notebook, übertragen. Dies hat den Vorteil, dass der Anwender nicht an dem Ort, an dem sich das Netzwerkgerät befindet, anwesend sein muss, um eine Neu-Konfiguration oder eine Änderung einer Konfiguration eines Netzwerkgerätes vornehmen zu können. Über eine Datenfernverbindung kann er auf das Netzwerkgerät zugreifen, wobei er an seinem Konfigurationsgerät die jeweilige Eingabemaske in dem gewünschten Format aufrufen kann.

## Patentansprüche

1. Verfahren zur Konfiguration von Netzwerkgeräten, insbesondere Ethernet-Switchen, wobei auf einer Anzeigeeinheit des Netzwerkgerätes oder eines an das Netzwerkgerät anzuschließendes Konfigurationsgerät eine Eingabemaske zur Eingabe von Konfigurationsdaten erscheint, **dadurch gekennzeichnet, dass** die Eingabemaske in zumindest zwei unterschiedlichen Formaten darstellbar ist und die Eingabe der Konfigurationsdaten in den zumindest beiden Formaten inhaltsgleich erfolgt, wobei die eingegebenen Daten nach ihrer Eingabe je nach Format der Eingabemaske in unterschiedlichen Datenformaten weiterverarbeitet werden.

2. Verfahren nach Anspruch 1 , **dadurch gekennzeichnet, dass** das eine Format ein Web-basiertes Format, insbesondere ein HTML-Format, ist und das andere Format ein DOS-Format ist.

3. Verfahren nach Anspruch 1 oder 2, **dadurch gekennzeichnet, dass** mittels einer Bedieneinheit zwischen den beiden Formaten der Eingabemaske umgeschaltet wird.

4. Verfahren nach einem der vorhergehenden Ansprüche, **dadurch gekennzeichnet, dass** die in die jeweilige Eingabemaske eingegebenen Daten in den unterschiedlichen Datenformaten über eine Datenfernverbindung zwischen dem Netzwerkgerät und dem Konfigurationsgerät übertragen werden.

5. Verfahren nach einem der vorhergehenden Ansprüche, **dadurch gekennzeichnet, dass** die Eingabemaske in genau zwei unterschiedlichen Formaten darstellbar ist und die Eingabe der Konfigurationsdaten in den beiden Formaten inhaltsgleich erfolgt, wobei die eingegebenen Daten nach ihrer Eingabe je nach Format der Eingabemaske in unterschiedlichen Datenformaten weiterverarbeitet werden.
